# EUROPÄISCHE PATENTSCHRIFT

(11) **EP 0 720 817 B1**
(45) Veröffentlichungstag und Bekanntmachung des Hinweises auf die Patenterteilung: **17.10.2001**
(21) Anmeldenummer: 95119173.3
(22) Anmeldetag: 06.12.1995
(51) Int. Cl.: A22C 21/00

(54) **Einrichtung zum Zerlegen der Flügel von Geflügelkörpern**
Device for the cut-off of the wings of poultry
Dispositif pour le découpage des ailes de volailles

(30) Priorität: 03.01.1995 DE 19500014
(43) Veröffentlichungstag der Anmeldung: 10.07.1996
(73) Patentinhaber: NORDISCHER MASCHINENBAU RUD. BAADER GMBH + CO KG, 23560 Lübeck (DE)
(72) Erfinder: Bargelé, Norbert, Dr., D-23617 Stockelsdorf (DE); Brandt, Manfred, D-23564 Lübeck (DE); Landt, Andreas, D-23554 Lübeck (DE); Szymanski, Marek, D-24306 Kleinmeinsdorf (DE)
(74) Vertreter: Patentanwälte Wenzel & Kalkoff

(56) Entgegenhaltungen:
- EP-A- 0 312 881
- EP-A- 0 323 661
- EP-A- 0 459 580
- NL-A- 8 302 495
- NL-A- 8 400 162
- US-A- 4 016 624
- US-A- 4 563 791
- US-A- 4 993 111
- US-A- 5 188 560

## Beschreibung

Die Erfindung geht aus von einer Einrichtung zum Zerlegen der Flügel von Geflügelkörpern in ihre Einzelglieder umfassend Fördermittel zum Vorbewegen der Geflügelkörper längs ihrer Symmetrieebene, jeweils zu beiden Seiten der Bahn der Geflügelkörper angeordnete Führungen zum Führen der Flügel, Hilfsfördermittel zur Stützung der Flügel während der Zerlegung sowie Trennmittel zur Durchführung von Trennschnitten im Bereich der Flügelgelenke.

Eine derartige Vorrichtung ist aus dem Dokument EP-A-0 312 881 bekannt. Die in diesem Dokument beschriebene Einrichtung weist einen Sattelförderer, Führungen zu beiden Seiten der Flügelkörperbahn zum Führen der Flügel, Hilfsfördermittel zur Stützung des Flügels sowie Trennmittel auf. Eine derartige Einrichtung weist jedoch den Nachteil auf, daß die Zuführung, Ausrichtung und Fixierung der abzutrennenden Flügelteile zu den jeweiligen Trennmitteln nicht ausreichend exakt gewährleistet werden kann, so daß eine Beeinträchtigung der Trennschnittqualität auftritt.

Eine weitere Einrichtung ist aus der US 5 188 560 bekannt. Diese Einrichtung umfaßt, ein Paar Kreismesser, welche symmetrisch zu der Bahn der Geflügelkörper und V-förmig zueinander ausgerichtet sind. Die Geflügelkörper gelangen an ihren Fußgelenken in Schäkeln eines Hängeförderers hängend in den Bereich dieser Einrichtung, wobei die Flügel durch Führungen im Bereich des Flügelunterarmes geführt mit ihrem Flügelhandgelenk in die Schnittebene der Kreismesser gebracht werden. Die Trennung erfolgt im Flügelhandgelenk von der Beuge her.

Aus der US 5 176 654 ist weiter eine Einrichtung zum Abtrennen des Flügelunterarmes zu entnehmen, bei der die Geflügelkörper ebenfalls an ihren Fußgelenken hängend gefördert werden. Dabei gelangen die Geflügelkörper in den Bereich einer Schneideinrichtung aus einem Paar V-förmig zueinander ausgerichteter Kreismesser, wobei die Führung des Geflügelkörpers so erfolgt, daß die Ellenbogengelenke gegen die Kreismesser geführt werden, die diese von der Beuge her trennen.

Beim Zerlegen der Flügel kommt es darauf an, daß die Schnitte anatomisch korrekt verlaufen, d.h. bezogen auf die Trennung im Bereich der Gelenke so geführt sind, daß sie in der natürlichen Trennebene der Gelenkverbindungen verlaufen. Voraussetzung dafür ist eine präzise Führung und Ausrichtung, in dem vorliegenden Falle der Flügel, so daß deren entsprechende Teilung möglich ist, wobei dies in einem weiten Bereich unabhängig von der jeweiligen Größe der Geflügelkörper durchführbar sein soll.

Diese Ziele werden durch eine Einrichtung der gattungsgemäßen Art dadurch erreichen, daß das Hilfsfördermittel einen gabelförmigen Mitnehmer aufweist, der, dem vorbewegten Geflügelkörper folgend, so ausgebildet ist, daß der Flügel im Bereich des zwischen dem Flügelspitzenglied und dem Flügelunterarm gebildeten Flügelspitzengelenk faßbar und in vorbestimmter Ebene gegen das entsprechende Trennmittel rührbar ist.

In einer Ausgestaltung zur Bearbeitung von Flügeln, die noch mit einem Teil, der sogenannten Vorderhälfte des Geflügelkörpers verbunden sind, können die Fördermittel zum Vorbewegen der Vorderhälften als Sattelförderer ausgebildet sein, wobei diese auf die einzelnen Sättel des Förderers aufstülpbar sind.

Die mit einer derartigen Einrichtung erzielbaren Vorteile bestehen insbesondere darin, daß die wenig gestaltfesten Flügel jeweils sehr genau ausgerichtet führbar und den Trennmitteln präsentierbar sind, wobei ein entscheidender Vorzug ist, daß eine sichere Fixierung in Ausrichtlage während des Trennvorganges erfolgt.

Weitere vorteilhafte Ausgestaltungen der Erfindung sind den übrigen Unteransprüchen zu entnehmen.

Die Erfindung ist nachstehend anhand eines in der Zeichnung dargestellten Ausführungsbeispiels näher erläutert, bei dem im wesentlichen lediglich eine Seite der in praxi spiegelbildlich zu beiden Seiten der Bahn der Fördermittel angeordneten Bearbeitungsmittel gezeigt ist. Es zeigen
- Fig. 1: eine Einrichtung zum Abtrennen Flügelspitzenglieder von Geflügelkörpern in perspektivischer Ansicht vereinfacht dargestellt,
- Fig. 2: einen Querschnitt durch die Einrichtung nach Fig. 1 in deren Bearbeitungsbereich,
- Fig. 3: eine Einrichtung zum Abtrennen der Flügelunterarme von Geflügelkörpern in perspektivischer Ansicht vereinfacht dargestellt
- Fig. 4: einen Querschnitt durch die Einrichtung nach Fig. 3 in deren Arbeitsbereich

In einem nicht näher gezeigten Gestell einer Geflügelbearbeitungsmaschine, beispielsweise zum Gewinnen des Brustfleisches, ist ein auf geeignete Weise angetriebener, endlos umlaufender Förderer 1 installiert, welcher mit Sätteln 2 zur Aufnahme der zu bearbeitenden Geflügelkörper 5 bestückt ist. Der Förderer 1 durchläuft mit seinem Obertrum eine Bahn, die von Bearbeitungseinrichtungen 3, 4 zum Abschneiden der Flügelspitzenglieder 5.4 bzw., der Flügelunterarme 5.3 flankiert wird.

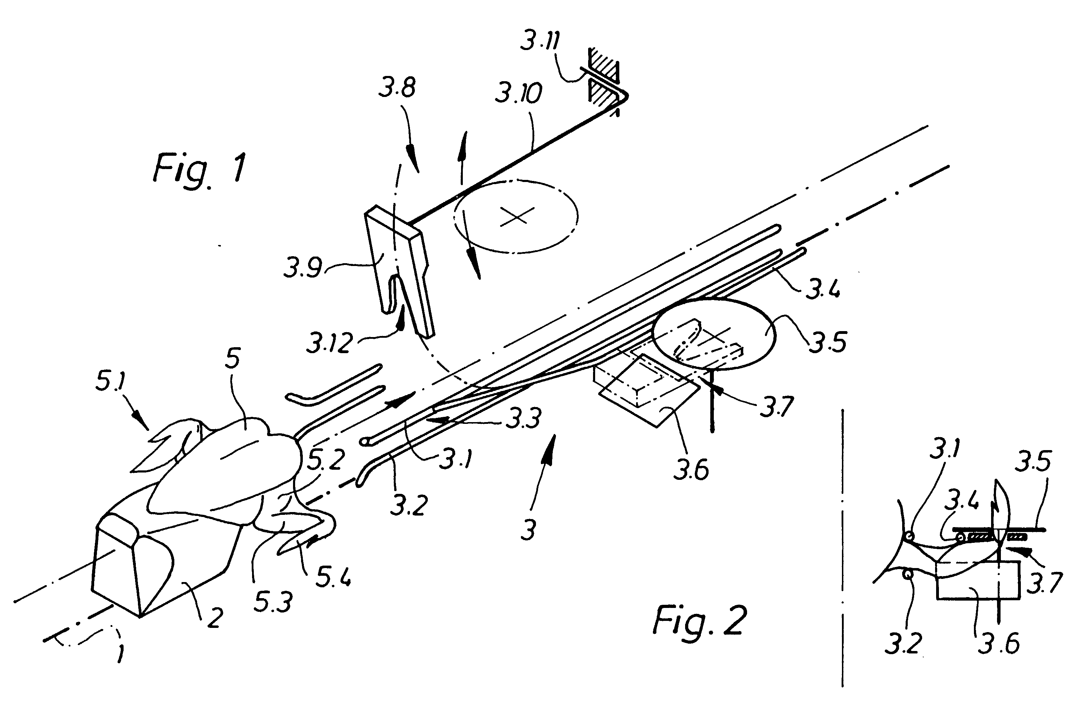

Die Bearbeitungseinrichtung 3 zum Abschneiden der Flügelspitzenglieder 5.4 besteht aus zwei zu beiden Seiten der Bahn der Geflügelkörper 5 spiegelbildlich angeordneten Teilvorrichtungen. Jede Teilvorrichtung umfaßt entsprechend Figuren 1 und 2 ein System von Führungen, im wesentlichen bestehend aus einem neben der Bahn der Sättel 2 angeordneten Paar von übereinander und im wesentlichen parallel zu der Bahn des Förderers 1 verlaufenden Führungsstangen 3.1 , 3.2 . Die Führungsstangen 3.1 , 3.2 bilden zwischen sich einen Spalt 3.3 zur Führung des Flügeloberarms 5.2 , wobei der Angriff der Führungsstangen 3.1 , 3.2 in der Nähe des Flügel-Körpergelenkes erfolgt. Die obere Führungsstange 3.1 weist eine in Förderrichtung divergierend beginnende und dann im wesentlichen parallel zu der Bahn des Förderers 1 verlaufende seitliche Führung 3.4 auf, die etwa in der Ebene der oberen Führungsstange 3.1 verläuft. Unmittelbar oberhalb der Führung 3.4 und diese von außen übergreifend befindet sich ein auf geeignete Weise angetriebenes Kreismesser 3.5 , welches in horizontaler Ebene rotiert. Diesem ist unterhalb seiner gegen die Förderrichtung weisenden Schneide eine flächige Stützführung 3.6 zugeordnet, die zu der Unterflanke des Kreismessers 3.5 einen Spalt 3.7 beläßt.

Neben der Bahn des Förderers 1 ist weiter ein Hilfsförderer 3.8 mit einem Mitnehmer 3.9 angeordnet. Der Mitnehmer 3.9 ist am freien Ende eines Schwenkhebels 3.10 befestigt, der um eine oberhalb der Bahn der Sättel 2 gelegene, sich quer zu dieser und horizontal erstreckende Achse 3.11 schwenkbar ist. Dabei ist die Zuordnung zu dem Kreismesser 3.5 derart, daß der Mitnehmer 3.9 in der tiefsten Schwenkstellung, die gleichzeitig eine Endlage darstellt, in den Spalt 3.7 zwischen dem Kreismesser 3.5 und der Stützführung 3.6 eingeschwenkt, d. h. das Kreismesser 3.5 unterläuft. Der Mitnehmer 3.9 hat die Form eines Gabelfusses mit einer V-förmigen Aussparung 3.12 , die in der Endlage die Achse des Kreismesser 3.5 umgreift. Die Betätigung des Schwenkhebels 3.10 erfolgt, übertragen durch ein geeignetes, nicht gezeigtes Getriebe, in Abhängigkeit von der Stellung der Sättel 2 im Förderfortschritt, wobei der Einsatzpunkt und das Profil der Schwenkgeschwindigkeit, sowie der Zeitpunkt des Rückschwenkens mit dem Förderer 1 abgestimmt ist.

Eine wie in Fig. 1 gezeigt auf den vorauslaufenden Teil des Sattels 2 mit dem Brustteil nach oben aufgestülpte Geflügel-Vorderhälfte 5 mit Flügeln 5.1 gelangt durch den Förderer 1 vorgeschoben zunächst in den Bereich der Führungsstangen 3.1 und 3.2 , wobei der Flügel 5.1 in den Spalt 3.3 zwischen diesen einläuft, so daß der Flügeloberarm 5.2 in Körpernähe geführt wird. im weiteren Förderfortschritt kommt die Führung 3.4 zur Wirkung, die eine zusätzliche Abstützung des Flügelunterarms 5.3 bewirkt. Während dieses Prozesses wird der Mitnehmer 3.9 in der oberen Schwenklage gehalten, so daß der Geflügelkörper 5 ungehindert vorgeschoben werden kann. Nach Erreichen einer vorbestimmten Stellung wird nun der Mitnehmer 3.9 durch Schwenken gegen den Uhrzeigersinn aktiviert und zwar so, daß schließlich eine begleitende Stützung des Flügels 5.1 erfolgt, wobei die Aussparung 3.12 das Flügelspitzenglied 5.4 im Bereich seiner Gelenkverbindung zu dem Flügelunterarm 5.3 umgreift. Dabei wird die entsprechende Positionierung kurz vor Erreichen des Kreismessers 3.5 dadurch sichergestellt, daß der Flügelunterarm 5.3 auf die Stützführung 3.6 aufläuft und somit gegen die Unterseite des Mitnehmers 3.9 gedrückt wird. Der unter dieser Positionierung erfolgende Trennschnitt verläuft somit unmittelbar im Bereich des Flügelspitzengelenkes, wobei der Flügelunterarm 5.3 durch Ablauf von der Stützführung 3.6 wieder freigegeben wird und damit der Geflügelkörper nach diesem Prozeß unbehindert weiterführbar ist. Unmittelbar nach dem Abtrennen des Flügelspitzengliedes 5.4 wird der Mitnehmer 3.9 in seine Bereitschaftsstellung zur Bearbeitung des nächsten Geflügelkörpers rückgeschwenkt.

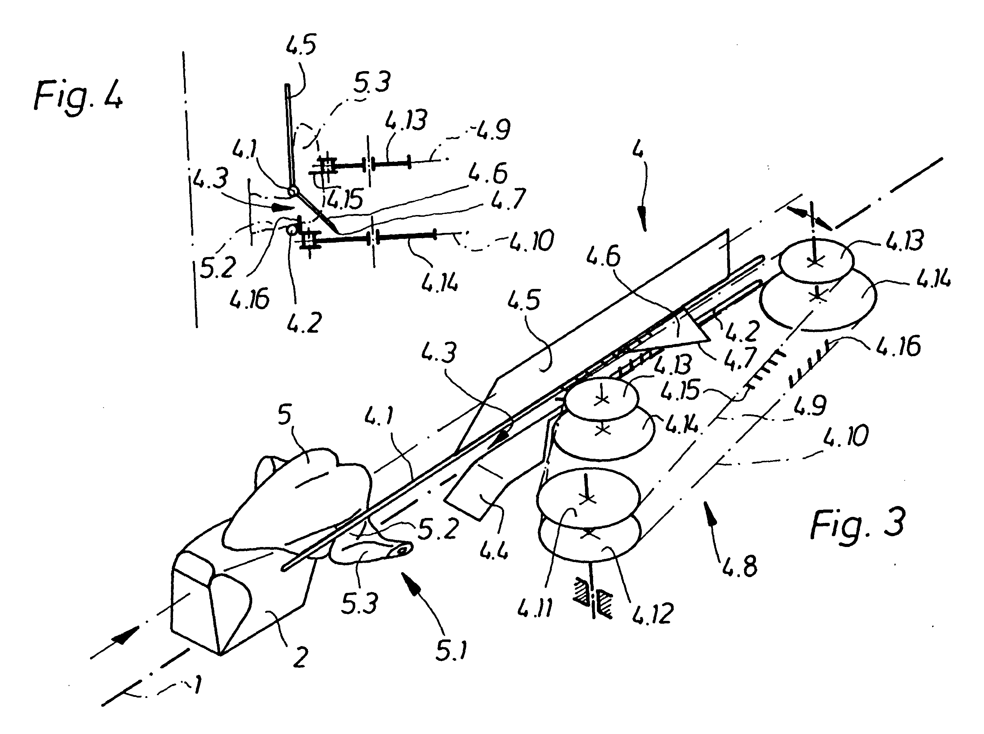

Der vorstehend beschriebenen Bearbeitungseinrichtung 3 ist die Bearbeitungseinrichtung 4 zum Abtrennen des Flügelunterarms 5.3 nachgeschaltet, die ebenfalls aus zwei zu beiden Seiten der Bahn der Geflügelkörper 5 spiegelbildlich angeordneten Teilvorrichungen besteht. Jede Teilvorrichtung umfaßt entsprechend Figuren 3 und 4 ein System von Führungen, im wesentlichen bestehend aus einem neben der Bahn der Sättel 2 angeordneten Paar von übereinander und im wesentlichen parallel zu der Bahn des Förderers 1 verlaufenden Führungselementen 4.1 und 4.2 , wobei dasjenige 4.1 eine Fortführung der Führungsstangen 3.1 der Bearbeitungseinrichtung 3 bildet. Zwischen den Führungselementen 4.1 und 4.2 ist ein Spalt 4.3 zur Führung des Flügeloberarms 5.2 belassen, wobei der Angriff der Führungselemente 4.1 , 4.2 in der Nähe des Flügel-Körpergelenkes erfolgt. Das untere Führungselement 4.2 ist an seinem gegen die Förderrichtung weisenden Ende mit einer flächigen Auflageführung 4.4 zur Stützung des Flügeloberarms 5.2 versehen. Das obere Führungselement 4.1 bildet die Unterkante einer senkrecht aufragenden Gleitführung 4.5 und ist mit einer seitlich herausragenden, dachförmig geneigt angeordneten Messerklinge 4.6 versehen. Der Neigungswinkel beträgt ca. 45°. Die Messerklinge 4.6 hat eine Schneide 4.7 , die gegenüber dem Führungselement 4.2 in Förderrichtung divergierend verläuft.

Neben der Bahn des Förderers 1 ist ein Hilfsförderer 4.8 angeordnet. Dieser weist zwei synchron zu dem Förderer 1 angetriebene, in horizontalen Ebenen übereinander umlaufende Endlos-Kettenförderer 4.9 und 4.10 auf, die jeweils um ein Antriebsrad 4.11 bzw. 4.12 und zwei lose umlaufende Umlenkräder 4.13 und 4.14 geführt sind. Dabei sind die Kettenförderer 4.9 und 4.10 so geführt, daß sich jeweils ein zu der Gleitführung 4.5 und den Führungselementen 4.1 und 4.2 parallel verlaufender Arbeitstrum ergibt. Beide Kettenförderer 4.9 und 4.10 sind mit Stacheln 4.15 bzw. 4.16 besetzt, wobei die Stacheln 4.15 des oberen Kettenförderers 4.9 horizontal nach außen und die Stacheln 4.16 des unteren Kettenförderers 4.10 senkrecht aufragend ausgerichtet sind. Die Umlaufebenen und Lagen der Kettenförderer 4.9 und 4.10 sind so gewählt, daß der Arbeitstrum des oberen Kettenförderers 4.9 mit seinen Stacheln 4.15 dem unteren Bereich der Gleitführung 4.5 unter Abstand gegenüberliegt, und daß der Arbeitstrum des unteren Kettenförderers 4.10 mit seinen Stacheln 4.16 unmittelbar neben dem Führungselement 4.2 und in den Spalt 4.3 aufragend verläuft. Dabei sind der Hilfsförderer 4.8 und das Führungssystem einander so zugeordnet, daß die Messerklinge 4.6 im Bereich der Arbeitstrums der Kettenförderer 4.9 und 4.10 liegt.

Die im vorigen Absatz beschriebene Teilvorrichtung der Bearbeitungseinrichtung 4 ist vorzugsweise um die Achse der Antriebsräder 4.11 und 4.12 schwenkbar angeordnet und gegen eine nicht gezeigte Feder in die Bahn der Geflügelkörper 5 einschwenkbar, so daß sich die Teilvorrichtung automatisch auf die jeweilige Flügelgliedlänge einstellt.

Nach dem Abschneiden des Flügelspitzengliedes 5.4 gelangt der weiterhin auf dem Sattel 2 aufgesattelte und durch den Förderer 1 vorgeschobene Geflügelkörper in den Bereich des Führungssystems der Bearbeitungseinrichtung 4 , wobei der Flügel 5.1 über die Auflaufführung 4.4 in den Spalt 4.3 zwischen den Führungselementen 4.1 und 4.2 einläuft, so daß der Flügeloberarm 5.2 in Körpernähe geführt wird. Dabei wird der Flügel 5.1 im Bereich des zwischen dem Flügelunterarm 5.3 und dem Flügeloberarm 5.2 gebildeten Ellenbogengelenks 5.6 unterstützt und somit der Flügelunterarm 5.3 aufgerichtet. Dieser gelangt so in den Bereich des oberen Kettenförderers 4.9 , der den Flügelunterarm 5.3 mit seinen Stacheln 4.15 erfaßt und gegen die Gleitführung 4.5 gedrängt haltend unter Begleitung des Geflügelkörpers 5 vorbewegt. Gleichzeitig hat der Kettenförderer 4.10 mit seinen Stacheln 4.16 den Flügeloberarm 5.2 im Bereich des Ellenbogengelenkes 5.6 erfaßt, so daß der Flügel 5.1 zweifach gefaßt gegen die Messerklinge 4.6 geführt wird, die schließlich in der Beuge des Ellenbogengelenkes 5.6 beginnend den Flügelunterarm 5.3 "anatomisch" trennt. Dieser kann durch geeignete Ausgestaltung der Gleitfläche 4.5 an beliebiger Stelle des Umlaufs des Kettenförderers 4.9 abgeworfen werden.

### Bezugszeichenliste

- 1: Förderer
- 2: Sattel

- 3: Bearbeitungseinrichtung
- 3.1: Führungsstange
- 3.2: Führungsstange
- 3.3: Spalt
- 3.4: Führung
- 3.5: Kreismesser
- 3.6: Stützführung
- 3.7: Spalt
- 3.8: Hilfsförderer
- 3.9: Mitnehmer
- 3.10: Schwenkhebel
- 3.11: Achse
- 3.12: Aussparung

- 4: Bearbeitungseinrichtung
- 4.1: Führungselement
- 4.2: Führungselement
- 4.3: Spalt
- 4.4: Auflaufführung
- 4.5: Gleitführung
- 4.6: Messerklinge
- 4.7: Schneide
- 4.8: Hilfsförderer
- 4.9: Kettenförderer
- 4.10: Kettenförderer
- 4.11: Antriebsrad
- 4.12: Antriebsrad
- 4.13: Umlenkrad
- 4.14: Umlenkrad
- 4.15: Stachel
- 4.16: Stachel

- 5: Geflügelkörper
- 5.1: Flügel
- 5.2: Flügeloberarm
- 5.3: Flügelunterarm
- 5.4: Flügelspitzenglied
- 5.5: Flügelspitzengelenk
- 5.6: Ellenbogengelenk

## Patentansprüche

1. Einrichtung zum Zerlegen der Flügel (5.1) von Geflügelkörpern (5) in ihre Einzelglieder, umfassend Fördermittel (1) zum Vorbewegen der Geflügelkörper (5) längs ihrer Symmetrieebene, jeweils zu beiden Seiten der Bahn der Geflügelkörper (5) angeordnete Führungen zum Führen der Flügel (5.1), Hilfsfördermittel (3.8/4.8) zur Stützung der Flügel während der Zerlegung sowie Trennmittel (3.5/4.6) zur Durchführung von Trennschnitten im Bereich der Flügelgelenke (5.5/5.6), **dadurch gekennzeichnet, daß** das Hilfsfördermittel (3.8) einen gabelförmigen Mitnehmer (3.9) aufweist, der, dem vorbewegten Geflügelkörper (5) folgend, so ausgebildet ist, daß der Flügel (5.1) im Bereich des zwischen dem Flügelspitzenglied (5.4) und dem Flügelunterarm (5.3) gebildeten Flügelspitzengelenks (5.5) faßbar und in vorbestimmter Ebene gegen das entsprechende Trennmittel (3.5) führbar ist.

2. Einrichtung nach Anspruch 1, **dadurch gekennzeichnet, daß** als ein weiteres Hilfsfördermittel (4.8) ein den Geflügelkörper (5) synchron begleitender Endlosförderer vorgeschen ist, der so ausgebildet ist, daß der Flügeloberarm (5.2) und der Flügelunterarm (5.3) an ihren Oberseiten formschlüssig fördernd erfaßbar sind, wobei diese im wesentlichen rechtwinklig zueinander und senkrecht zu der Bahn der Geflügelkörper (5) geführt sind.

3. Einrichtung nach Anspruch 1 oder 2, **dadurch gekennzeichnet, daß** die Fördermittel (1) zum Vorbewegen der Geflügelkörper (5) als Sattelförderer zur Aufnahme der Geflügelkörper (5) in Form von Vorderhälften ausgebildet sind, die durch einen zwischen den Flügeln und den Beinen und in bezug auf das Rückgrat geneigt und dieses zerteilend verlaufenden Querschnitt gewonnen wurden, wobei die Aufnahme in der Brusthöhle des Geflügelkörpers (5) erfolgt.

4. Einrichtung nach einem der vorhergehenden Ansprüche 1 bis 3, **dadurch gekennzeichnet, daß** der Mitnehmer (3.9) an einem Schwenkhebel (3.10) befestigt ist, der im Takt der vorbewegten Geflügelkörper (5) in die Bahn der Flügel (5.1) und dabei in die Beuge des Flügelspitzengelenks (5.5) fassend einschwenkbar und nach Durchführung des Trennschnittes rückschwenkbar ausgebildet ist.

5. Einrichtung nach einem der vorhergehenden Ansprüche 1 bis 4, **dadurch gekennzeichnet, daß** das Trennmittel (3.5) ein Kreismesser ist, welches in einer zu der Symmetrieebene des Geflügelkörpers (5) im wesentlichen senkrechten Ebene umlaufend angetrieben ist und daß der Mitnehmer (3.9) in seiner Aktivstellung mit dem Kreismesser derart zusammenwirkt, daß seine obere Flanke unmittelbar unterhalb der Schnittebene des Kreismessers geführt ist.

6. Einrichtung nach einem der vorhergehenden Ansprüche 1 bis 5, **gekennzeichnet durch** eine mindestens im Bereich des Kreismessers (3.5) angeordnete Stützführung (3.6) zum Andrücken des Flügeloberarms (2) gegen die Unterfläche des Mitnehmers (3.9).

7. Einrichtung nach einem der vorhergehenden Ansprüche 2 bis 6, **dadurch gekennzeichnet, daß** der Endlosförderer jeweils einen für jeden Flügelteil zuständigen Kettenförderer (4.9/4.10) aufweist, der mit Stacheln (4.15/4.16) versehen ist.

8. Einrichtung nach Anspruch 7, **gekennzeichne**t **durch** eine dem Kettenförderer (4.9) zum fördernden Erfassen des Flügelunterarms (5.3) unter Belassen eines im wesentlichen parallelen Spaltes gegenüberliegende, vorzugsweise flächige Gleitführung (4.5).

9. Einrichtung nach einem der vorhergehenden Ansprüche 2 bis 8, **dadurch gekennzeichnet, daß** die dem Flügeloberarm (5.2) zuweisende Kante der Gleitführung (4.5) als dem Kettenförderer (4.10) zum fördernden Erfassen des Flügeloberarms (5.2) unter Belassen eines im wesentlichen parallelen Spaltes (4.3) gegenüberliegendes Führungselement (4.1) ausgebildet ist.

10. Einrichtung nach Anspruch 9, **dadurch gekennzeichnet, daß** das Führungselement (4.1) mit einer Messerklinge (4.6) versehen ist, welche unter einem den Winkel zwischen dem Flügelunterarm (5.3) und Flügeloberarm (5.2) im wesentlichen halbierenden Winkel angeordnet ist, wobei die Außenkante der Messerklinge (4.6) als Schneide (4.7) ausgebildet ist und nach außen gegenüber dem Führungselement (4.1) in Förderrichtung divergierend verläuft.

11. Einrichtung nach einem der vorhergehenden Ansprüche 1 bis 10, **dadurch gekennzeichnet, daß** der Abstand der zu beiden Seiten der Bahn der Geflügelkörper (5) angeordneten Teilvorrichtungen der Bearbeitungseinrichtung (4) gegen Federkraft verringerbar ist.

12. Einrichtung nach einem der vorhergehenden Ansprüche 1 bis 11, **dadurch gekennzeichnet, daß** sie in eine z.B. das Filetieren des Brustfleisches umfassende Bearbeitungslinie integrierbar ist.

## Claims

1. Apparatus for cutting up the wings (5.1) of poultry bodies (5) into their component parts, comprising conveying means (1) for advancing the poultry bodies (5) in their plane of symmetry, guiding means for guiding the wings (5.1) and arranged on each side of the path of the poultry bodies (5), auxiliary conveying means (3.8/4.8) for supporting the wings during the cutting, and severing means (3.5/4.6) for carrrying out severing cuts in the region of the wing joints (5.5/5.6), **characterized in that** the auxiliary conveying means (3.8) has a forked entrainer (3.9) which, following the movement of the advanced poultry body (5), is adapted to engage the wing (5.1) in the region of a wing tip joint (5.5) formed between the wing tip member (5.4) and the lower wing member (5.3) and to guide the wing against the respective severing means (3.5) in a predetermined plane.

2. Apparatus according to claim 1, **characterized in that** as a further auxiliary conveying means (4.8) there is provided an endless conveyor synchronously accompanying the advanced poultry body (5) and adapted to enable positive conveying engagement of the upper wing member (5.2) and lower wing member (5.3) by their upper faces, whereby they are guided essentially at right angles to each other and perpendicular to the path of the poultry bodies (5).

3. Apparatus according to claim 1 or 2, **characterized in that** the conveying means (1) for advancing the poultry bodies (5) are designed as saddle conveyors adapted to receive the poultry bodies (5) in the form of front halves, which have been obtained by a cross-sectioning cut extending between the wings and legs inclined with respect to the backbone and separating the latter, with the support occurring in the breast cavity of the poultry body (5).

4. Apparatus according to any one of the preceding claims 1 to 3, **characterized in that** the entrainer (3.9) is attached to a pivot lever (3.10) and adapted to pivot synchronously with the advanced poultry body (5) into the path of the wings (5.1) and thus engaging in the bent of the wing tip joint (5.5) and to pivot back after the severing cut has been carried out.

5. Apparatus according to any one of the preceding claims 1 to 4, **characterized in that** the severing means (3.5) is a circular knife, which is driven to rotate in a plane lying essentially perpendicular to the plane of symmetry of the poultry body (5) and that the entrainer (3.9) is arranged in its active position to cooperate with the circular knife such that its upper side is guided directly below the cutting plane of the circular knife.

6. Apparatus according to any one of the preceding claims 1 to 5, **characterized by** a supporting guide (3.6) arranged in the region of the circular knife (3.5) for pressing the upper wing member (2) against the underside of the entrainer (3.9).

7. Apparatus according to any one of the preceding claims 2 to 6, **characterized in that** the endless conveyor comprises one chain conveyor (4.9/4.10) each appropriate for each wing portion, respectively, and provided with spikes (4.15/4.16).

8. Apparatus according to claim 7, **characterized by** a preferably flat sliding guide (4.5) arranged to oppose the upper chain conveyor (4.9), and spaced therefrom by an essentially parallel gap, for conveyingly engaging the lower wing member (5.3).

9. Apparatus according to any one of preceding claims 2 to 8, **characterized in that** the edge of the sliding guide (4.5) facing the upper wing member (5.2) is formed as a guide element (4.1) opposing the chain conveyor (4.10) for conveyingly engaging the upper wing member (5.2) but separated from the lower chain conveyor by an essentially parallel gap (4.3).

10. Apparatus according to claim 9, **characterized in that** the guide element (4.1) is provided with a knife blade (4.6), which is arranged at an angle adapted to essentially divide the angle between the lower and upper wing members (5.3, 5.2, respectively) in half, the outer edge of the knife blade (4.6) being formed as a cutting edge (4.7) and diverging with respect to the guide element (4.1) when viewed in the conveying direction.

11. Apparatus according to any one of the preceding claims 1 to 10, **characterized in that** the spacing of the partial devices of the processing apparatus (4) arranged at both sides of the path of the poultry bodies (5) is adapted to be reduced against spring force.

12. Apparatus according to any one of the preceding claims 1 to 11, **characterized in that** it is adapted for integration in a processing line, e.g. comprising the filleting of the breast meat.

## Revendications

1. Dispositif pour dépecer les ailes (5.1) de corps de volailles (5) en leurs membres individuels, comportant des moyens de transport (1) destinés à déplacer les corps de volailles (5) le long de leur plan de symétrie, des guides, disposés sur les deux côtés du trajet des corps de volailles (5), destinés à guider les ailes (5.1), des moyens de transport auxiliaires (3.8/4.8) destinés à soutenir les ailes pendant le dépeçage, ainsi que des moyens de séparation (3.5/4.6) destinés à réaliser les incisions de séparation dans la zone des articulations d'aile (5.5/5.6), **caractérisé en ce que** le moyen de transport auxiliaire (3.8) comporte un entraîneur (3.9) en forme de fourche, qui, en suivant le corps de volaille (5) se déplaçant vers l'avant, est configuré de telle sorte que l'aile (5.1) puisse être saisie dans la zone de l'articulation d'extrémité d'aile (5.5) formée entre l'extrémité d'aile (5.4) et l'avant-bras (5.3), et puisse être guidée, dans un plan prédéfini, contre le moyen de séparation correspondant (3.5).

2. Dispositif selon la revendication 1, **caractérisé en ce que**, en tant qu'autre moyen de transport auxiliaire (4.8), on prévoit un transporteur sans fin, qui accompagne d'une manière synchrone le corps de volaille (5), transporteur sans fin configuré de telle sorte que le bras (5.2) et l'avant-bras (5.3) puissent être saisis, par leurs faces supérieures, avantageusement par une liaison avec correspondance de forme, ces derniers étant guidés pour l'essentiel perpendiculairement l'un à l'autre, et perpendiculairement au trajet des corps de volaille (5).

3. Dispositif selon la revendication 1 ou 2, **caractérisé en ce que** les moyens de transport (1) destinés à faire avancer les corps de volailles (5) sont configurés comme des transporteurs à selles pour transporter des corps de volailles (5) sous forme de moitiés avant, qui ont été obtenues par une entaille transversale, entre les ailes et les pattes, inclinée par rapport à la colonne vertébrale et subdivisant cette dernière, la saisie ayant lieu dans la cavité thoracique du corps de volaille (5).

4. Dispositif selon l'une des revendications précédentes 1 à 3, **caractérisé en ce que** l'entraîneur (3.9) est fixé à un levier pivotant (3.10) qui, d'une manière synchrone avec les corps de volailles (5) se déplaçant vers l'avant, peut pénétrer par pivotement dans le trajet des ailes (5.1), et à cette occasion avec prise dans le pli de l'articulation de l'extrémité d'aile (5.5), et qui est configuré de façon à pouvoir subir un pivotement en retour après exécution de l'incision de séparation.

5. Dispositif selon l'une des revendications précédentes 1 à 4, **caractérisé en ce que** le moyen de séparation (3.5) est un couteau circulaire, qui est entraîné en rotation dans un plan pour l'essentiel perpendiculaire au plan de symétrie du corps de volaille (5), et **en ce que** l'entraîneur (3.9), dans sa position active, coopère avec le couteau circulaire de telle sorte que son flanc supérieur soit guidé directement en-dessous du plan d'incision du couteau circulaire.

6. Dispositif selon l'une des revendications 1 à 5, **caractérisé par** un guide de soutien (3.6), disposé au moins dans la zone du couteau circulaire (3.5), pour appuyer le bras (2) de l'aile contre la face inférieure de l'entraîneur (3.9).

7. Dispositif selon l'une des revendications 2 à 6, **caractérisé en ce que** le transporteur sans fin comporte un transporteur à chaîne (4.9/4.10) affecté à chaque partie d'aile, le transporteur à chaîne étant pourvu de pointes (4.15/4.16).

8. Dispositif selon la revendication 7, **caractérisé par** un guide coulissant (4.5), de préférence plan, opposé au transporteur à chaîne (4.9), pour saisir convenablement l'avant-bras (5.3) en laissant un interstice pour l'essentiel parallèle.

9. Dispositif selon l'une des revendications précédentes 2 à 8, **caractérisé en ce que** l'arête du guide coulissant (4.5) dirigée vers le bras (5.2) est configurée comme un élément de guidage (4.1), opposé au transporteur à chaîne (4.10) destiné à saisir le bras d'aile (5.2) en laissant un interstice (4.3) essentiellement parallèle.

10. Dispositif selon la revendication 9, **caractérisé en ce que** l'élément de guidage (4.1) est pourvu d'une lame de couteau (4.6), qui est disposée selon un angle pour l'essentiel égal à la moitié de l'angle entre l'avant-bras (5.3) et le bras (5.2), l'arête extérieure de la lame de couteau (4.6) étant configurée comme un tranchant (4.7), et courant vers l'extérieur, en divergeant dans la direction du transport par rapport à l'élément de guidage (4.1).

11. Dispositif selon l'une des revendications 1 à 10, **caractérisé en ce que** la distance des appareillages partiels, disposés sur les deux côtés du trajet des corps de volailles (5), du dispositif de traitement (4), peut être diminuée sous l'effet de la force d'un ressort.

12. Dispositif selon l'une des revendications précédentes 1 à 11, **caractérisé en ce qu'**il est intégré dans une ligne de traitement, comportant par exemple le filetage du blanc de poitrine.
